# NEUE EUROPÄISCHE PATENTSCHRIFT

(11) **EP 0 664 204 B2**
(45) Veröffentlichungstag und Bekanntmachung des Hinweises auf die Entscheidung über den Einspruch: **24.09.2003**
(45) Hinweis auf die Patenterteilung: 22.03.2000
(21) Anmeldenummer: 94120322.6
(22) Anmeldetag: 21.12.1994
(51) Int. Cl.: B29C 70/72, B29C 45/14

(54) **Kunststoffbehälter mit eingebetteter Kontaktfahne**
Plastic container with embedded contact plug
Récipient en matière plastique avec connecteur de contact

(30) Priorität: 19.01.1994 DE 4401461
(43) Veröffentlichungstag der Anmeldung: 26.07.1995
(73) Patentinhaber: VERWALTUNGSGESELLSCHAFT GEIGER TECHNIK GmbH & Co. KG, D-82467 Garmisch-Partenkirchen (DE)
(72) Erfinder: Geiger, Albert, D-82467 Garmisch-Partenkirchen (DE)
(74) Vertreter: Flosdorff, Jürgen, Dr.

(56) Entgegenhaltungen:
- EP-A- 0 102 878
- WO-A-92/13376
- DE-A- 3 209 491
- DE-A- 3 840 713
- GB-A- 605 688
- GB-A- 2 207 079
- GB-A- 2 213 091
- US-A- 4 454 398

## Beschreibung

Die Erfindung betrifft einen Kunststoffbehälter, in den wenigstens eine Kontaktfahne derart eingebettet ist, daß diese mit ihren Enden zum Inneren des Behälters und zur Außenseite hin freiliegt.

Derartige Kunststoffbauteile werden in den verschiedensten Formen und zu unterschiedlichsten Zwecken verwendet. Ein typisches Beispiel ist das Dekkelteil eines Bremsflüssigkeitsbehälters eines Kraftfahrzeugs, in das zwei Flachkontaktfahnen derart eingebettet sind, daß sie mit ihren Enden zum Inneren des Behälters und zur Außenseite hin freiliegen, um den Füllstand der Bremsflüssigkeit zu erfassen und die Information hierüber über einen elektrischen Anschluß an eine Anzeige- oder Kontrolleinrichtung weiter zu geben.

Zur Herstellung eines Kunststoffbauteils der betrachteten Art, beispielsweise eines solchen Deckelteils eines Bremsflüssigkeitsbehälters, werden die Kontaktfahnen in die Spritzgußform eingebracht, in die anschließend der erhitzte Kunststoff eingespritzt wird, der die in die Form eingelegten Elemente, im vorliegenden Beispiel Flachkontaktfahnen, umschließt.

Bisher werden Flachkontaktelemente mit einer glatten Oberfläche in die Kunststoffmasse eingebettet. Trotz aller Bemühungen ist es dabei nicht gelungen, einen vollkommen dichten Anschluß zwischen der Kontaktfahne und dem umschließenden Kunststoffmaterial zu erzielen. Selbst wenn zunächst durch den Schrumpfungsprozeß der Kunststoff dicht an dem eingebetteten Element anliegt, tritt bei Temperaturänderungen infolge der dann wirksam werdenden unterschiedlichen Wärmeausdehnungskoeffizienten der eingelegten Kontaktfahne und des Kunststoffmaterials ein kleiner Spalt im Einbettungsbereich auf, durch den -im Falle eines Bremsflüssigkeitsbehälters- flüssiger Behälterinhalt nach außen austreten kann, was hierbei -wie auch bei zahlreichen anderen Anwendungsbeispielen des betrachten Kunststoffbauteils- höchst unerwünscht ist.

Die US-A-4 454 398 offenbart eine Klemmendichtung für einen abgedichteten Miniatur-Kippschalter, bei dem die Klemmen eine napfförmige Isolierbasis eines Schalters durchgreifen. Diese Klemmen haben zwei ringförmige Nuten, in die das Kunststoffmaterial eingreift, wobei durch diese zwei Nuten die angestrebte gute Abdichtung hervorgerufen werden soll. Die Druckschrift weist darauf hin, daß die gute Abdichtung nicht hervorgerufen würde, wenn mehr oder weniger als zwei Nuten ausgebildet wären. Die WO-A-92/13376, GB-A-2 207 079 und EP-A-0 102 876 schlagen zur Erzielung einer hochgradigen Abdichtung vor, ein zusätzliches Dichtmittet zwischen einem eingebetteten Element und einem Kunststoffbauteil zu verwenden. Die WO-A-92/13376 macht zur spaltfreien Verbindung zwischen einem metallischen Kontaktstift und dem Kunststoffkörper eines Streckers den Vorschlag, den Kontaktstift mit einer Dichtmasse zu versehen, die beim Spritzgießen aufgeschmolzen wird.

Die GB-A-2 207 079 schlägt vor, Flachkontakte, die keine durchgehend umlaufende Nuten haben, mit einer Gummilösung zu beschichten, um eine Abdichtung mit der umgebenden Kunststoffmasse hervorzurufen.

Die EP-A-0 102 878 offenbart die Verwendung eines zusätzlichen Dichtmittels in Form von Elastomer-Einsätzen, in die Stifte mit flachwinkligen Nuten eingebettet werden, um dann zusammen mit diesen in ein Kunststoffgehäuse eingesetzt werden.

Die GB-A-2 213 091 offenbart ein Kunststoffbauteil mit dessen Wandung durchgreifenden Elementen, die eine glatte Oberfläche haben. Die GB-A-605 688 schlägt die Einbettung eines metallischen Einsatzes in eine wärmeisolierende Hülle mit einem Ringvorsprung vor, um eine Schweißverbindung mit dem Einsatz zu ermöglichen, ohne daß das die Hülle umgebende Kunststoffmaterial dabei schmilzt.

Die DE-AS 1 008 967 befaßt sich mit einer Rohrverbindung zwischen einem Stahlrohr und einem Kunststoffrohr und schlägt ein Übergangsstück aus Kunststoff vor, in das an einem Ende ein Kunststoffrohr beispielsweise eingeklebt wird und in dessen anderen Endbereich ein Metallring mit Innengewinde eingebettet wird. Dieser Metallring erstreckt sich nicht durch das Übergangsstuck hindurch, sondern ist beidseitig in das Kunststoffmaterial eingeschlossen. Zur Erzielung einer guten und dichten Haftung des Gewindestahlrings in dem Übergangsstück wird vorgeschlagen, die Außenseite des Stahlrings mit Kreuz- und/oder Querrillen, mit Kordelungen nach Art eines Kordelgewindes, mit Nasen, Ansätzen oder sonstigen Erhöhungen oder Vertiefungen zu versehen. Diese gute Haftung ist erforderlich, damit sich der Gewindestahlring nicht dreht, wenn das Stahlrohr in dessen Gewinde eingeschraubt wird. Sofern bei dieser Anordnung ein Flüssigkeits-Dichtigkeitsproblem besteht, liegt dieses im Bereich des Gewindes, das von Natur aus nicht flüssigkeitsdicht ist. In der Praxis wird zur Abdichtung des Gewindes ein Dichtungsring eingelegt, bevor das Stahlrohr eingeschraubt wird, womit gewährleistet ist, daß keine Flüssigkeit aus dem Rohr austreten kann.

Der vorliegenden Erfindung liegt die Aufgabe zugrunde, ein vorzugsweise aus Metall bestehendes Element (bzw. Elemente) anzugeben, das derart in Kunststoff eingebettet werden kann, daß ein im wesentlichen flüssigkeitsdichter Einschluß des Elementes gewährleistet ist, so daß bei den auftretenden Temperaturbereichen praktisch keine Flüssigkeit entlang des ein Kunststoffbauteil oder einen Teil desselben durchgreifenden, von einer Seite zur anderen führenden, eingebetteten Elementes entweichen kann.

Diese Aufgabe wird erfindungsgemäß durch die im Patentanspruch 1 angegebenen Merkmale gelöst.

Vorteilhafte Weiterbildungen der Erfindung sind in den Unteransprüchen beschrieben.

Gemäß der vorliegenden Erfindung hat das eingebettete Element, das vorzugsweise aus Metall besteht, jedoch beispielsweise auch aus Kunststoff bestehen kann, an seinem eingebetteten Abschnitt eine aus wenigstens drei Nuten und/oder Vorsprüngen bestehende Riffelung, die quer, d.h. im Winkel zu der Längsrichtung verläuft, in der der Abschnitt des Elementes in die Kunststoffmasse eingebettet ist. Bevorzugt verläuft dabei die Riffelung im rechten Winkel zur Längsrichtung des Elementes, d.h. zu dem durch die Einbettung in der Kunststoffmasse erzeugten Kanal, den das Element ausfüllt. Es liegt allerdings im Rahmen der Erfindung, daß die Riffelung auch schräg oder dachförmig zur Längsrichtung des Elementes verlaufen kann.

Erfindungsgemäß erstreckt sich ferner die Riffelung um den gesamten Umfang des Elementes. Wenn das Element eine flache Streifenform hat, wie dies beispielsweise bei Flachkontaktfahnen der Fall ist, bedeutet dies, daß die Riffelung nicht nur quer über die Oberseite und die Unterseite des streifenförmigen Elementes verläuft, sondern durchgehend auch in die Randkanten eingeformt oder dort angeformt ist. Wenn das eingebettete Element hingegen beispielsweise eine kreisrunde Querschnittsform hat, verläuft die Riffelung in einzelnen ringförmigen Nuten oder Vorsprüngen um den Umfang des Elementes.

Es wird betont, daß das eingebettete Metallelement auch andere Querschnittsformen, beispielsweise diejenige eines Rechtecks oder Quadrats haben kann.

Die erfindungsgemäße Ausbildung hat zur Folge, daß der Kunststoff beim Herstellungsvorgang des erfindungsgemäßen Kunststoffbauteils in die Riffelung eingreift, wobei sich im Kontaktbereich am Kunststoff der Riffelung des Metallelementes entsprechende Konturen ausbilden. Wenn die Riffelung des Metallelementes aus voneinander beabstandete V-förmigen Nuten besteht, entstehen im Einbettungsbereich ebenso geformte Vorsprünge am Kunststoffkörper, die in die V-förmigen Nuten eingreifen. Wenn die Riffelung aus muldenförmigen Vertiefungen besteht, stellen sich beim Herstellungsvorgang entsprechend geformte gewölbte Vorsprünge am Kunststoffkörper ein. Die Nuten oder Vertiefungen können auch an der Oberseite und der Unterseite des Elementes versetzt zueinander angeordnet sein, damit das Element eine ausreichende Querschnittsdicke behält. In diesem Fall verläuft die Riffelung an den Randkanten schräg zur Längsrichtung des Elementes.

Mit der Erfindung wird eine hochgradig dichte Einbettung einer Kontaktfahne in die Wand eines Kunststoffbehälters ohne zusätzliches Dichtmittel bewirkt, weil die Kontaktfahne wenigstens drei voneinander beabstandeten Nuten und/oder Vorsprünge hat. Als Grund für die besonders gute Abdichtung ist anzunehmen, daß sich in mittleren Temperaturbereichen an einer dritten oder einer weiteren Nutflanke ein Preßkontakt einstellt, der die Ausbildung eines durch die Kunststoffwand durchgehenden Spaltes und damit eine Undichtigkeit verhindert.

Es liegt im Rahmen der Erfindung, daß an dem eingebetteten Metallelement mehrere voneinander beabstandete, sich über den gesamten Umfang erstrekkende Vorsprünge anstelle von Nuten ausgebildet sein können, die wiederum beispielsweise einen gewölbten oder umgekehrt-V-förmigen Querschnitt haben können.

Wie bereits erwähnt, legt sich die Kunststoffmasse beim Herstellungsvorgang dicht an das eingebettete Metallelement an, wobei bevorzugt im Querschnitt V-förmige, ringförmige Vorsprünge des Kunststoffs in entsprechend geformte Nuten in der Umfangsfläche des Metallelementes eingreifen. Temperaturänderungen, bei denen das Kunststoffmaterial und das eingebettete Metallelement unterschiedliche Längenänderungen erfahren, haben nun nicht mehr die Folge, daß sich ein von einer Seite des Kunststoffbauteils zur anderen entlang des Einbettungskanals verlaufender Spalt zwischen dem Metallelement und der Einbettungsmasse ausbildet, sondern es tritt im Gegenteil eine besondere Dichtwirkung dadurch ein, daß eine der beiden Flanken jeweils einer Nut in feste Anlage gegen die zugewandte Flanke des eingreifenden Vorsprungs gepreßt wird, wodurch ein absolut flüssigkeitsdichter Anschluß entsteht. Bei einer in umgekehrter Richtung verlaufenden, relativen Längenänderung kommt es an der anderen Flanke von Nut/Vorsprung zu dem die angestrebte Abdichtung hervorrufenden Preßkontakt.

Gemäß der vorliegenden Erfindung kann damit nicht nur ein flüssigkeitsdichter Einschluß eines von einer Seite zur anderen eines Kunststoffbauteils verlaufenden, eingebetteten Elementes hervorgerufen werden, sondern es ist auch eine gasdichte Ausbildung zu erzielen, was den Einsatzbereich des erfindungsgemäßen Kunststoffbauteils erheblich erweitert.

Das erfindungsgemäße Kunststoffbauteil wird -wie oben erwähnt ist- bevorzugt im Spritzgußverfahren hergestellt. Die Erfindung ist hierauf jedoch nicht beschränkt. Beispielsweise besteht auch die Möglichkeit, das erfindungsgemäße Bauteil im Blasverfahren herzustellen.

Die Nuten oder Vorsprünge der Riffelung des eingebetteten Elementes können in Längsrichtung des Elementes gleichmäßig voneinander beabstandet sein. Es kann aber auch vorgesehen sein, daß die Abstände zwischen den Nuten oder Vorsprüngen unterschiedlich groß sind, wodurch -je nach den verwendeten Materialien- gewährleistet werden kann, daß stets an einigen der Nu/Vorsprung-Flanken ein Preßkontakt herrscht.

Außerdem liegt es im Rahmen der Erfindung, daß die Riffelung des eingebetteten Elementes teils aus eingeschnittenen bzw. eingeformten Nuten und teils aus vorzugsweise ringförmigen Vorsprüngen bestehen kann, die wechselweise angeordnet sein können.

Bevorzugt ist, daß die um das Element umlaufenden Nuten oder Vorsprünge durchgehend dieselbe Querschnittsform aufweisen.

Die Erfindung wird nachfolgend mit Bezug auf die Zeichnung in näheren Einzelheiten beschrieben. Dabei zeigen:
- Fig. 1: eine perspektivische Ansicht eines erfindungsgemäßen Flachkontaktelement und
- Fig. 2A und 2B: auf rein schematische Weise einen Querschnitt durch den Einbettungsbereich des Flachkontaktelementes gemäß Fig.1 in zwei verschiedenen Temperaturzuständen.

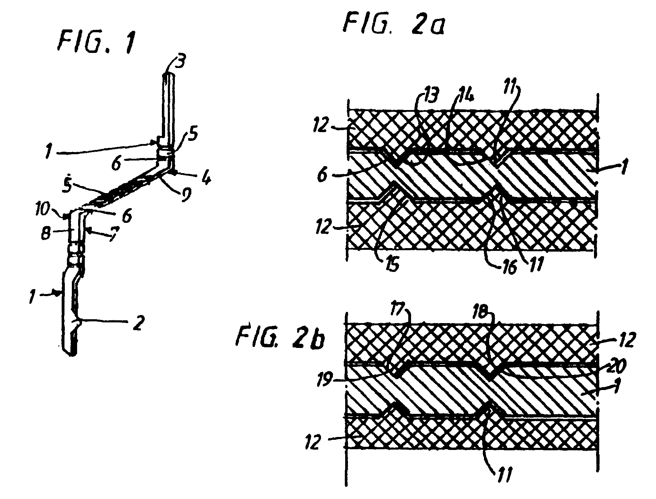

Fig. 1 zeigt eine Flachkontaktfahne 1, die beispielsweise derart in den (nicht dargestellten) Deckel eines Bremsflüssigkeitsbehälters eingebettet wird, daß ein seitlich vorstehender, dreieckiger Vorsprung 2 zum Inneren des Behälters freiliegt, während anderenends ein Anschlußabschnitt 3 zur Bildung eines Steckkontaktes nach außen ragt. Der dazwischen liegende Abschnitt 4 der Flachkontaktfahne 1 wird in das Kunststoffmaterial des Behälterdeckels, beispielsweise Polypropylen, eingebettet.

Der eingebettete Abschnitt 4 ist etwa Z-förmig gewinkelt, und enthält in jedem der so gebildeten Unterabschnitte eine Riffelung 5. Diese Riffelung besteht aus quer zur Längsrichtung der Flachkontaktfahne 1 verlaufenden, sich durchgehend um den gesamten Umfang erstreckenden Vertiefungen bzw. Nuten 6, die bei dieser Ausführungsform im gleichen Abstand voneinander ausbildet sind und jeweils durchgehend die gleiche Querschnittsform haben. Es wird darauf hingewiesen, daß sich die Riffelung nicht nur über die zwei Breitseiten, d. h. die Oberseite und die Unterseite 7,8 erstreckt, sondern durchgehend auch um die Randkanten 9, 10 verläuft.

Dies hat zur Folge, daß das die Flachkontaktfahne 1 einbettende Kunststoffmaterial mit entsprechend geformten Vorsprüngen 11 (siehe Fig. 2) um den gesamten Umfang der Flachkontktfahne 1 umlaufend in die Nuten 6 eingreift. Hierdurch ist die Entstehung eines von der Innenseite zur Außenseite des Kunststoffbauteils durchgehenden Spalts sowohl entlang der Oberund Unterseite 7, 8 als auch der Randkanten 9, 10 zuverlässig verhindert.

Die Figuren 2A und 2B zeigen, daß sich sowohl im Falle einer Temperaturerhöhung mit größerer Längenzunahme der Flachkontaktfahne 1 (Fig. 2A) als auch bei Temperatursenkung und stärkerer Verkürzung der Flachkontaktfahne 1 (Fig. 2B) jeweils ein Preßkontakt zwischen einer Nutflanke und einer zugehörigen Flanke des Vorsprungs 11 ergibt. Die Figuren zeigen dies auf rein schematische Weise. Wenn sich die Flachkontaktfahne 1 stärker ausdehnt als das sie umgebende Kunststoffmaterial 12, werden in Fig. 2A die Flanken 13 und 14 der Nuten 6 gegen die Flanken 15 und 16 der Vorsprünge 11 gepreßt, wodurch ein vollkommen dichter Anschluß entsteht, der auch jede Kapillarwirkung unterbindet. Verkürzt sich die Flachkontaktfahne 1 bei niedrigeren Temperaturen stärker als das Kunststoffmaterial 12, werden die jeweils anderen Nutflanken 17 und 18 gegen die zugehörigen Flanken 19 und 20 der Vorsprünge 11 gepreßt, wodurch derselbe Effekt hervorgerufen wird. Auch bei einer Verringerung der Dicke der Flachkontaktfahne 1 infolge Temperaturabnahme ist die Abdichtung an den Nutflanken gewährleistet.

## Patentansprüche

1. Kunststoffbehälter, in den wenigstens eine Kontaktfahne (1) derart eingebettet ist, daß diese mit ihren Enden zum Inneren des Behälters und zur Außenseite hin freiliegt, wobei die Kontaktfahne (1) an ihrem eingebetteten Abschnitt (4) eine aus mindestens drei Nuten und/oder Vorsprüngen bestehende querverlaufende Riffelung (5) aufweist, die sich um den gesamten Umfang der Kontaktfahne (1) erstreckt, wobei die beidseitigen Flanken der mindestens drei Nuten und/oder Vorsprünge eingebettet sind und ein dichter Anschluß durch Preßkontakt des Kunststoffs an den Flanken der Nuten und/oder Vorsprünge ohne Verwendung eines zusätzlichen Dichtmittels hervorgerufen wird.

2. Kunststoffbehälter nach Anspruch 1, wobei
die Riffelung (5) voneinander beabstandete V-förmige Nuten (6) aufweist.

3. Kunststoffbehälter nach Anspruch 1, wobei
die Riffelung voneinander beabstandete muldenförmige Vertiefungen aufweist.

4. Kunststoffbehälter nach einem der Ansprüche 1 bis 3, wobei
die Riffelung (5) im rechten Winkel zur Längsrichtung der Kontaktfahne (1) verläuft.

5. Kunststoffbehälter nach einem der Ansprüche 1 bis 4, wobei
die umlaufenden Nuten oder Vorsprünge durchgehend dieselbe Querschnittsform haben.

6. Kunststoffbehälter nach einem der Ansprüche 1 bis 5, wobei
die Kontaktfahne (1) eine flache Streifenform hat.

7. Kunststoffbehälter nach Anspruch 6, wobei
die Kontaktfahne eine aus Metall bestehende Flachkontaktfahne (1) ist.

8. Kunststoffbehälter nach einem der Ansprüche 1 bis 7, wobei
der Kunststoffbehälter im Spritzgußverfahren hergestellt ist.

## Claims

1. A plastic container which has embedded thereinto a contact tag (1) in such a manner that said tag is exposed at its free ends to the interior of said container and to the outside, said contact tag (1) being provided on its embedded portion (4) with transversely extending recesses or projections (5) which consist of at least three grooves and/or protrusions and which extend over the whole circumference of said contact tag (1), the flanks of said at least three grooves and/or protrusions on both sides being embedded, and a tight connection being established by press contact of the plastic material on the flanks of said grooves and/or protrusions without the use of an additional sealant.

2. The plastic container according to claim 1, wherein
said recesses or projections (5) comprise spaced-apart V-shaped grooves (6).

3. The plastic container according to claim 1, wherein
said recesses or projections comprise spaced-apart trough-shaped recesses.

4. The plastic container according to any one of claims 1 to 3, wherein
said recesses or projections (5) extend at a right angle relative to the longitudinal direction of said contact tag (1).

5. The plastic container according to any one of claims 1 to 4, wherein
the circumferential grooves or protrusions have always the same cross-sectional shape.

6. The plastic container according to any one of claims 1 to 5, wherein
said contact tag (1) has the form of a flat strip.

7. The plastic container according to claim 1, wherein
said contact tag is a flat contact tag (1) consisting of metal.

8. The plastic container according to any one of claims 1 to 7, wherein
said plastic container is produced in an injection molding process.

## Revendications

1. Récipient en matière synthétique, dans lequel est noyé au moins un connecteur de contact (1) de telle sorte que celui-ci repose librement avec ses extrémités vers l'intérieur du récipient et vers le côté extérieur, où le connecteur de contact (1), à son tronçon noyé (4), présente une cannelure (5) s'étendant transversalement constituée d'au moins trois rainures et/ou saillies, qui s'étend sur toute la périphérie du connecteur de contact (1), les flancs des deux côtés des trois rainures et/ou saillies au moins sont noyés, et un raccordement étanche est réalisé par contact par pression de la matière synthétique aux flancs des rainures et/ou saillies sans utilisation d'un moyen d'étanchéité additionnel.

2. Récipient en matière synthétique selon la revendication 1, où la cannelure (5) présente des rainures en forme de V (6) espacées les unes des autres.

3. Récipient en matière synthétique selon la revendication 1, où la cannelure présente des creux en forme d'auget espacés les uns des autres.

4. Récipient en matière synthétique selon l'une des revendications 1 à 3, où la cannelure (5) s'étend à angle droit à la direction longitudinale du connecteur de contact (1).

5. Récipient en matière synthétique selon l'une des revendications 1 à 4, où les rainures ou saillies s'étendant tout autour ont partout la même forme en section transversale.

6. Récipient en matière synthétique selon l'une des revendications 1 à 5, où le connecteur de contact (1) a une forme de bande plate.

7. Récipient en matière synthétique selon la revendication 6, où le connecteur de contact a un connecteur de contact plat (1) réalisé en métal.

8. Récipient en matière synthétique selon l'une des revendications 1 à 7, où le récipient en matière synthétique est réalisé par un procédé de moulage par injection.
